# DEMANDE DE BREVET EUROPEEN

(11) **EP 0 969 220 A2**
(43) Date de publication de la demande: **05.01.2000**
(21) Numéro de dépôt: 99401481.9
(22) Date de dépôt: 16.06.1999
(51) Int. Cl.: F16D 67/06

(54) **Dispositif de transmission d'un couple de rotation à un élément mené et de freinage rapide de ce dernier**

(30) Priorité: 30.06.1998 FR 9808331
(71) Demandeur: WARNER FRANCE, F-72700 Allonnes (FR)
(72) Inventeur: Gapihan, Alain, 49080 Bouchemaine (FR); Legourrierec, Jean-Luc, 72000 Le Mans (FR); Poiraud, Muriel, 49480 Saint Sylvain D'Anjou (FR); Seguin, Gérard, 49800 Andard (FR); Trahard, Gérard, 72100 Le Mans (FR); Thebault, Jean-Pierre, 72190 Saint Pavace (FR)
(74) Mandataire: Thinat, Michel

(57) **Abrégé**

La présente invention concerne un dispositif de transmission d'un couple de rotation à un élément mené (2) et de freinage rapide de ce dernier.

Le dispositif est caractérisé en ce que le frein électromagnétique de l'élément mené (2) comprend un plateau de frein (26) adjacent à un inducteur de frein (22) à l'opposé de l'armature de frein (25) et pouvant être axialement déplacé simultanément avec l'armature (25) lorsque la bobine (23) de l'inducteur (22) est alimentée et un disque de frein (33) est fixé à l'élément mené (2) et comporte sur ses deux faces respectivement deux garnitures de friction (35,36).

L'invention trouve application en particulier pour des métiers à tisser.

## Description

La présente invention concerne un dispositif de transmission d'un couple de rotation à un élément mené et de freinage rapide de ce dernier, en cas de nécessité.

Elle s'applique en particulier, mais de manière non limitative, à la commande principale d'un métier à tisser.

On connaît un tel dispositif comprenant un embrayage électromagnétique permettant d'accoupler l'élément mené à un élément menant et un frein électromagnétique permettant le freinage, en cas d'urgence, de l'élément mené. Le frein électromagnétique comprend un inducteur fixe permettant le déplacement axial, lorsque la bobine de l'inducteur de frein est alimentée, d'une armature de frein pour freiner par friction l'élément mené.

Cependant, le freinage par friction selon ce dispositif connu s'effectue par mise en contact de l'une des faces de la paroi en acier de l'armature de frein sur la face dressée correspondante de l'inducteur en acier, de sorte que lors d'un freinage rapide, il peut se produire un phénomène de soudure par réchauffement de l'armature à la partie correspondante de l'inducteur de frein, le frein ne pouvant alors plus être relâché ou libéré.

La présente invention a pour but d'éliminer l'inconvénient ci-dessus en proposant un dispositif de transmission d'un couple de rotation à un élément mené et de freinage rapide, en cas de nécessité, de ce dernier, comprenant un embrayage électromagnétique permettant d'accoupler l'élément mené à un élément menant et comportant un inducteur fixe, un rotor d'embrayage solidaire en rotation de l'élément menant et une armature d'embrayage pouvant être déplacée axialement relativement au rotor d'embrayage lorsque la bobine de l'inducteur d'embrayage est alimentée pour solidariser en rotation l'élément mené à l'élément menant ; et un frein électromagnétique de l'élément mené comprenant un inducteur fixe de frein, une armature de frein pouvant être déplacée axialement relativement à l'élément mené lorsque la bobine de l'inducteur de frein est alimentée pour freiner par friction l'élément mené, et qui est caractérisé en ce que le frein électromagnétique comprend en outre un plateau de frein adjacent à l'inducteur de frein à l'opposé de l'armature de frein et pouvant être axialement déplacé simultanément avec l'armature de frein lorsque la bobine de l'inducteur de frein est alimentée et un disque de frein fixé à l'élément mené en étant adjacent au plateau de frein, axialement déplaçable et comportant sur ses deux faces respectivement deux garnitures de friction, le plateau de frein venant en contact sur la garniture de frein adjacente du disque de frein lors du déplacement de l'armature de frein de façon à amener l'autre garniture de friction du disque de frein en contact sur une face plane dressée d'une paroi d'un carter du dispositif pour freiner ainsi l'élément mené.

De préférence, le disque de frein comporte une âme ajourée flexible permettant le déplacement axial du disque par déformation de l'âme ajourée sous l'effet de la poussée axiale exercée sur le disque de frein par le plateau de frein.

Les garnitures de friction sont en un matériau composite à coefficient de friction élevé, ou de tout autre type de matériau de friction.

Le frein électromagnétique comprend également une membrane annulaire flexible interposée entre l'inducteur de frein et le plateau de frein et fixée d'une part à ce dernier et d'autre part au corps de l'inducteur de frein.

La membrane flexible est fixée au corps de l'inducteur de frein par au moins une vis de fixation ancrée dans un trou taraudé de ce corps, prolongé par un perçage débouchant en face de l'armature de frein et dans lequel est logé un ressort de rappel de l'armature de frein et du plateau de frein à leur position de repos lorsque la bobine de l'inducteur de frein n'est plus alimentée de façon à désengager le plateau de frein de la garniture de friction correspondante du disque de frein dont l'autre garniture de friction est élastiquement désengagée de la face plane dressée de la paroi du carter.

L'armature de frein et le plateau de frein sont jumelés l'un à l'autre par des axes cylindriques transversaux parallèles à la direction axiale de déplacement de l'armature et du plateau de frein et traversant librement le corps de l'inducteur de frein.

Des axes cylindriques parallèles sont montés coulissant dans le corps de l'inducteur de frein entre l'armature de frein et le plateau de frein en étant situés à l'extérieur des axes de liaison de l'armature de frein au plateau de frein, de façon à permettre à l'armature de frein d'exercer l'effort de poussée sur le plateau de frein lorsque la bobine de l'inducteur de frein est alimentée.

Le corps de l'inducteur de frein comprend des oreilles radialement saillantes fixées entre le carter de frein et le carter d'embrayage par des vis de fixation parallèles transversales aux oreilles enserrant ces dernières par des parties formant brides de fixation respectivement du carter de frein et du carter d'embrayage et des clinquants sont disposés de part et d'autre de chaque oreille et entre les deux brides de fixation pour régler la course du disque de frein et celle de l'armature d'embrayage.

L'armature d'embrayage est solidaire en rotation de l'élément mené par l'intermédiaire d'une membrane annulaire flexible permettant le déplacement axial de l'armature d'embrayage indépendamment du degré d'usure des garnitures de friction du disque de frein.

L'élément mené est un arbre rotatif et le moyeu de frein est fixé sur l'arbre mené par une frette de serrage à l'aide de vis de fixation et l'élément menant est un arbre rotatif auquel est accouplée une poulie d'entrée.

L'inducteur d'embrayage est centré et fixé dans le carter d'embrayage.

L'invention sera mieux comprise et d'autres buts, caractéristiques, détails et avantages de celle-ci apparaîtront plus clairement dans la description explicative qui va suivre faite en référence aux dessins annexés donnés uniquement à titre d'exemple illustrant un mode de réalisation de l'invention et dans lesquels :
La figure 1 est une vue en coupe du dispositif conforme à l'invention ;
La figure 2 est une demi-vue de côté suivant la flèche II de la figure 1 ;
La figure 3 est une vue en coupe du frein électromagnétique du dispositif de l'invention suivant la ligne III-III de la figure 2 ;
La figure 4 représente le disque de frein à garnitures de friction faisant partie du frein électromagnétique de la figure 3 ;
La figure 5 est une vue en coupe suivant la ligne V-V de la figure 4 ;
La figure 6 est une vue en plan d'une membrane flexible utilisée dans le frein électromagnétique de la figure 3.

Le dispositif de l'invention va être décrit dans l'application à la commande principale d'un métier à tisser, mais il est bien entendu qu'il peut s'appliquer à d'autres machines dans lesquelles il est nécessaire de freiner rapidement un élément mené en cas d'urgence.

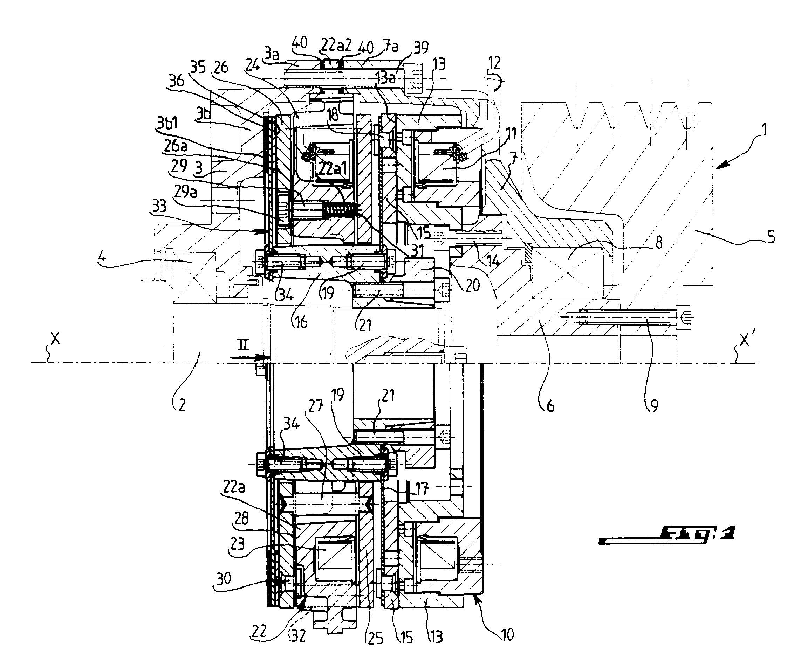

En se reportant aux figures, en particulier à la figure 1, le dispositif représenté permet la transmission d'un couple de rotation d'un élément menant 1 à un élément mené 2 qui se présente sous la forme d'un arbre monté à rotation dans un carter 3 par l'intermédiaire d'un roulement 4, par exemple du type à billes.

L'élément menant 1 comprend dans le cas présent une poulie d'entrée 5 entraînée par un moteur électrique (non représenté), un arbre 6 coaxial à l'arbre rotatif 2 et monté à rotation dans un carter 7 par l'intermédiaire d'un roulement 8, par exemple du type à billes, l'arbre rotatif 6 étant solidaire en rotation de la poulie 5 par l'intermédiaire de vis de fixation 9, dont une seule est représentée.

Le dispositif comprend un inducteur d'embrayage 10 d'un embrayage électromagnétique et dont la bobine d'excitation 11 est reliée à une source d'alimentation (non représentée) par l'intermédiaire d'un cordon d'alimentation 12. L'embrayage électromagnétique comprend également une partie annulaire 13 formant rotor solidaire en rotation de l'arbre rotatif 6 par l'intermédiaire de vis de fixation 14 et dans une cavité annulaire de laquelle est logée la bobine 11. Le rotor 13 comporte une face d'extrémité dressée 13a perpendiculaire à l'axe longitudinal X-X' des arbres rotatifs 2, 6 et sur laquelle peut être attirée électromagnétiquement une armature annulaire d'embrayage 15 pouvant être déplacée axialement vers et au loin du rotor 13 suivant que la bobine 11 est alimentée ou non. L'armature d'embrayage 15 est solidaire en rotation d'un moyeu de frein 16 fixé sur l'arbre rotatif 2 par l'intermédiaire d'une membrane annulaire flexible 17 perpendiculaire, en position de repos, à l'axe X-X'. La membrane flexible 17 est fixée d'une part à l'armarture 15 par l'intermédiaire de rivets de fixation 18 disposés sur une même circonférence de l'armature 15 proche du bord périphérique externe de celle-ci et d'autre part au moyeu de frein 16 par l'intermédiaire de vis de fixation 19. Le moyeu de frein 16 est fixé sur l'arbre mené 2 par une frette de serrage 20 fixée au moyeu 16 par des vis de fixation 21 parallèles à l'axe X-X'.

Le dispositif comprend en outre un frein électromagnétique comprenant un inducteur fixe 22 dont la bobine d'excitation 23 est reliée à la source d'alimentation par l'intermédiaire d'un cordon 24. Le frein électromagnétique comprend en outre une armature de frein 25 perpendiculaire à l'axe X-X' disposée en face de l'armature d'embrayage 15 et pouvant être axialement déplacée relativement à l'inducteur fixe 22 vers et au loin de celui-ci suivant que la bobine 23 est alimentée ou non.

Le frein électromagnétique comprend également un plateau annulaire de frein 26 parallèle à l'armature de frein 25 et situé de façon adjacente au corps 22a de l'inducteur fixe 22 à l'opposé de l'armature de frein 25. Le plateau 26 est jumelé à l'armature de frein 25 par l'intermédiaire d'axes cylindriques parallèles 27 traversant librement le corps 22a de l'inducteur fixe 22 transversalement au plateau 26 et à l'armature 25, les deux extrémités de chacun des axes cylindriques de liaison 27 étant solidaires respectivement du plateau 26 et de l'armature 25. Ainsi, l'armature 25 et le plateau 26 se déplacent axialement de façon simultanée ou en tandem. Une membrane annulaire flexible 28 est interposée entre le plateau 26 et le corps 22a de l'inducteur fixe 22 en étant fixée d'une part au corps 22a par l'intermédiaire de vis de fixation 29 et d'autre part au plateau de frein 26 par l'intermédiaire de rivets 30. Chaque vis de fixation 29 a sa tête 29a logée dans un trou traversant 26a du plateau de frein 26 et est ancrée dans un trou taraudé du corps 22a de l'inducteur 22 prolongé par un perçage 22al réalisé dans le corps 22 parallèlement à l'axe X-X' et débouchant en face de l'armature de frein 25. Un ressort hélicoïdal 31 est logé dans le perçage 22al en étant précontraint entre l'extrémité de la vis de fixation 29 et l'armature de frein 25 de façon à rappeler élastiquement l'armature 25 hors du corps 22a de l'inducteur 22 lorsque la bobine 23 n'est pas alimentée. Des axes cylindriques 32 sont montés de façon coulissante dans le corps 22a de l'inducteur 22 transversalement à l'armature 25 et s'étendent entre cette dernière et le plateau de frein 26. Les axes 32 sont situés sur une circonférence supérieure à celle sur laquelle se trouvent les axes 27 et constituent des poussoirs permettant à l'armature de frein 25 de transmettre un effort de poussée au plateau 26 pour le déplacer axialement en déformant la membrane flexible 28 lorsque la bobine 23 est alimentée.

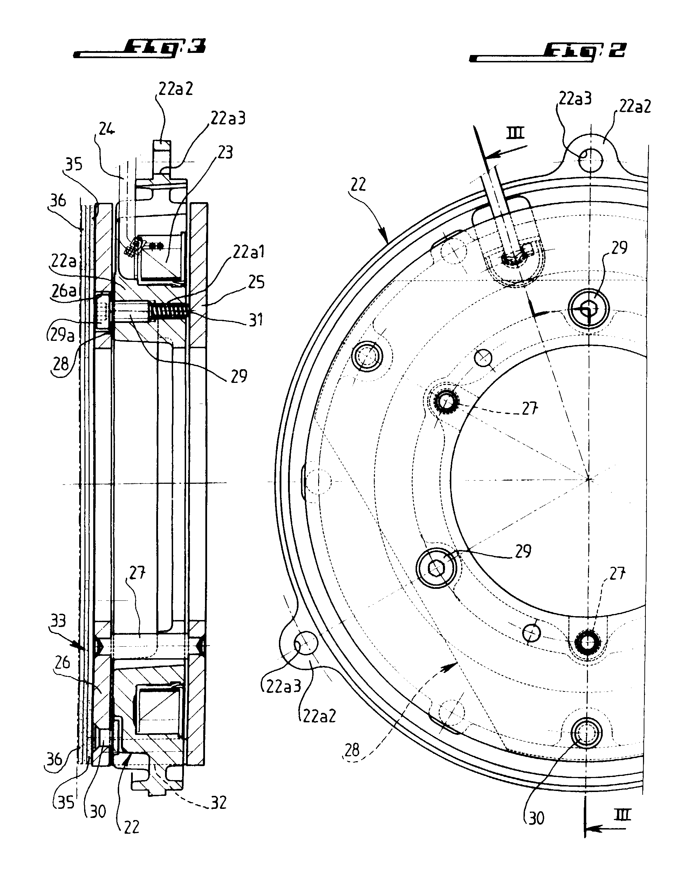

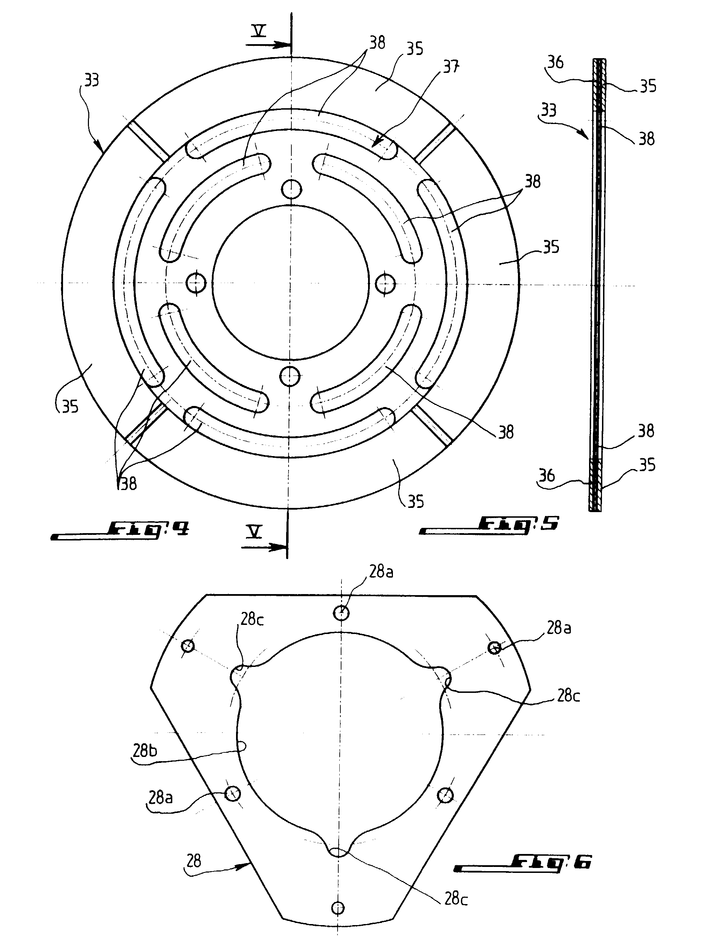

Le frein électromagnétique comprend enfin un disque de frein 33 parallèle et adjacent au plateau de frein 26 et solidaire en rotation du moyeu de frein 16 par des vis de fixation 34. Le disque de frein 33 comporte deux garnitures de friction 35, 36 solidaires respectivement des deux faces du disque 33 et réalisées en un matériau composite à coefficient de friction élevé présentant un faible taux d'usure. La figure 4 montre que chaque garniture de friction 35, 36 est constituée par quatre segments s'étendant sur tout le pourtour du disque 33. En outre, le disque de frein 33 a son âme ou partie centrale 37 comportant des lumières arquées oblongues ou de toute autre forme 38 traversant le disque 33 pour constituer des ajours permettant une déformation axiale du disque sous l'effet de la poussée transmise à celui-ci par le plateau de frein 26.

La figure 6 montre la forme particulière en triangle à sommets arqués de la membrane flexible 28 comportant les trous 28a de passage des vis de fixation 29 et dont l'ouverture centrale circulaire 28b comporte des découpes radiales saillantes sensiblement semi-circulaires 28c, dans le cas présent au nombre de trois, permettant le libre passage des axes cylindriques 27 à travers la membrane flexible 28.

Le corps 22a de l'inducteur 22 comprend des oreilles radialement saillantes 22a2 permettant de fixer de façon centrée l'inducteur 22 entre les deux carters de frein 3 et d'embrayage 7. A cet effet, chaque oreille 22a2 est percée d'un trou 22a3 permettant le passage d'une vis de fixation 39 parallèle à l'axe X-X' et permettant d'enserrer l'oreille 22a2 entre deux parties formant brides de fixation 3a, 7a respectivement du carter de frein 3 et du carter d'embrayage 7. Des clinquants 40 sont disposés d'une part entre la partie formant bride de fixation 3a et l'oreille correspondante 22a2 et d'autre part entre la partie formant bride de fixation 7a et l'oreille 22a2 de façon à régler définitivement, en usine, la course du disque de frein 33 et la course de l'armature d'embrayage 15. La membrane 17 reliant l'armature d'embrayage 15 au moyeu de frein 16 a une flexibilité élevée permettant une grande déflexion axiale de l'armature 15 de façon que le déplacement axial de cette armature puisse s'effectuer quel que soit le degré d'usure des garnitures de friction 35, 36 du disque de frein 33. En outre, la membrane flexible 17 permet également d'amortir des couples alternant agissant sur le couplage entre l'armature d'embrayage 15 et le rotor 13.

Le fonctionnement du dispositif de l'invention ressort déjà de la description qui précède et va être maintenant expliqué.

Lorsque du courant est amené à circuler dans le bobinage 11 de l'embrayage électromagnétique, le flux magnétique traversant le rotor 13 et l'armature d'embrayage 15 permet d'attirer l'armature 15 vers le rotor 13 pour l'amener en contact avec sa face dressée 13a et coupler en rotation l'armature 15 au rotor 13 de sorte que la poulie d'entrée 5 servant également de volant d'inertie moteur et l'arbre rotatif menant 6 entraînent en rotation l'arbre mené 2 par l'intermédiaire de la membrane flexible 17.

Pour effectuer un freinage rapide de l'arbre mené 2 en cas de besoin, le courant à travers la bobine 11 de l'inducteur d'embrayage 10 est interrompu et un courant est acheminé à travers la bobine 23 de l'inducteur de frein 22 de façon que le flux magnétique circulant notamment dans l'armature de frein 25 attire celle-ci vers le corps de l'inducteur 24 de sorte que l'armature 25 déplace simultanément dans le même sens, par l'intermédiaire des axes de liaison 27 et des axes formant poussoir 32, le plateau de frein 26 en déformant la membrane flexible 28. Le déplacement axial du plateau de frein 26 amène sa face plane adjacente à la garniture de friction 35 à contacter celle-ci pour déplacer axialement le disque de frein 33 dont l'autre garniture de friction 36 vient en contact avec une face dressée 3bl d'une paroi 3b du carter de frein 3. Les contacts par friction des garnitures 35, 36 avec les faces correspondantes 3bl de la paroi 3b et du plateau de frein 26 provoquent l'arrêt en rotation de façon quasiment instantanée de l'arbre mené 2. Pour relâcher l'action de freinage du disque de frein 33, le courant d'alimentation de la bobine 23 est interrompu et les ressorts 31 rappellent simultanément l'armature de frein 25 et le plateau de frein 26 à leur position inactive de repos de relâchement du frein à laquelle aucune friction résiduaire du disque de frein 33 ne subsiste. L'arbre mené 2 peut alors être à nouveau accouplé à l'arbre menant 6 par l'embrayage électromagnétique.

Le dispositif de transmission d'un couple rotatif à un élément mené et de freinage rapide de ce dernier, en cas de besoin, permet de transmettre de hauts couples de rotation alternatifs, sans couple résiduaire, avec des temps de réponse très courts et c'est la raison pour laquelle l'embrayage et le frein comportent des circuits électromagnétiques de commande indépendants l'un de l'autre, pour éviter toute interférence, de sorte que par des moyens de commutation électrique simples, le frein électromagnétique est commuté très rapidement.

La structure du dispositif est très simple et il peut être réparé très facilement sans coût élevé. Ce dispositif est prévu pour être monté sur une machine, réglée en usine, une fois pour toute, pour éviter tout réglage ultérieur coûteux, et a une durée de vie globale de l'ordre de 200 000 cycles d'embrayage et de freinage, couramment admise par les constructeurs de métiers à tisser et ceci sans entretien.

Enfin, la conception du dispositif de l'invention permet d'éviter tout phénomène de soudure par friction se produisant dans les dispositifs connus et réduit considérablement le bruit dû à la friction acier contre acier lors d'une action de freinage selon un dispositif connu.

## Revendications

1. Dispositif de transmission d'un couple de rotation à un élément mené (2) et de freinage rapide, en cas de nécessité, de ce dernier, comprenant un embrayage électromagnétique permettant d'accoupler l'élément mené (2) à un élément menant (1) et comportant un inducteur fixe (10), un rotor d'embrayage (13) solidaire en rotation de l'élément menant (1) et une armature d'embrayage (15) pouvant être déplacée axialement relativement au rotor d'embrayage (13) lorsque la bobine (11) de l'inducteur d'embrayage (10) est alimentée pour solidariser en rotation l'élément mené (2) à l'élément menant (1) ; et un frein électromagnétique de l'élément mené (2) comprenant un inducteur fixe de frein (22), une armature de frein (25) pouvant être déplacée axialement relativement à l'élément mené (2) lorsque la bobine (23) de l'inducteur de frein (22) est alimentée pour freiner par friction l'élément mené (2), caractérisé en ce que le frein électromagnétique comprend en outre un plateau de frein (26) adjacent à l'inducteur de frein (22) à l'opposé de l'armature de frein (25) et pouvant être axialement déplacé simultanément avec l'armature de frein (25) lorsque la bobine (23) de l'inducteur de frein (22) est alimentée et un disque de frein (33) fixé à l'élément mené (2) en étant adjacent au plateau de frein (26), axialement déplaçable et comportant sur ses deux faces respectivement deux garnitures de friction (35, 36), le plateau de frein (26) venant en contact sur la garniture de friction adjacente (35) du disque de frein (33) lors du déplacement de l'armature de frein (25) de façon à amener l'autre garniture de friction (36) du disque de frein (33) en contact sur une face plane dressée (3bl) d'une paroi (3b) d'un carter (3) du dispositif pour freiner ainsi l'élément mené (2).

2. Dispositif de freinage rapide d'un élément mené pouvant être entraîné par un élément menant (6), comprenant un frein électromagnétique de l'élément mené (2) comprenant un inducteur fixe de frein (22), une armature de frein (25) pouvant être déplacée axialement relativement à l'élément mené (2) lorsque la bobine (23) de l'inducteur de frein (22) est alimentée pour freiner par friction l'élément mené (2), caractérisé en ce que le frein électromagnétique comprend en outre un plateau de frein (26) adjacent à l'inducteur de frein (22) à l'opposé de l'armature de frein (25) et pouvant être axialement déplacé simultanément avec l'armature de frein (25) lorsque la bobine (23) de l'inducteur de frein (22) est alimentée et un disque de frein (33) fixé à l'élément mené (2) en étant adjacent au plateau de frein (26), axialement déplaçable et comportant sur ses deux faces respectivement deux garnitures de friction (35, 36), le plateau de frein (26) venant en contact sur la garniture de friction adjacente (35) du disque de frein (33) lors du déplacement de l'armature de frein (25) de façon à amener l'autre garniture de friction (36) du disque de frein (33) en contact sur une face plane dressée (3bl) d'une paroi (3b) d'un carter (3) du dispositif pour freiner ainsi l'élément mené (2).

3. Dispositif selon la revendication 1 ou 2, caractérisé en ce que le disque de frein (33) comporte une âme ajourée flexible (37) permettant le déplacement axial du disque (33) par déformation de l'âme ajourée (37) sous l'effet de la poussée axiale exercée sur le disque de frein (33) par le plateau de frein (26).

4. Dispositif selon l'une des revendications précédentes, caractérisé en ce que les garnitures de friction (35, 36) sont en un matériau composite ou de tout autre matériau de friction à coefficient de friction élevé.

5. Dispositif selon l'une des revendications précédentes, caractérisé en ce que le frein électromagnétique comprend une membrane annulaire flexible (28) interposée entre l'inducteur de frein (22) et le plateau de frein (26) et fixée d'une part à ce dernier et d'autre part au corps (22a) de l'inducteur (22).

6. Dispositif selon la revendication 5, caractérisé en ce que la membrane flexible (28) est fixée au corps (22a) de l'inducteur de frein (22) par au moins une vis de fixation (29) ancrée dans un trou taraudé de ce corps (22a) prolongé par un perçage (22al) de ce corps débouchant en face de l'armature de frein (25) et dans lequel est logé un ressort de rappel (31) de l'armature de frein (25) et du plateau de frein (26) à leur position de repos lorsque la bobine (23) de l'inducteur de frein (22) n'est plus alimentée de façon à désengager le plateau de frein (26) de la garniture de friction correspondante (35) du disque de frein (33) dont l'autre garniture de frein (36) est élastiquement désengagée de la face plane (3bl) de la paroi (3b) du carter (3).

7. Dispositif selon l'une des revendications précédentes, caractérisé en ce que l'armature de frein (25) et le plateau de frein (26) sont jumelés l'un à l'autre par des axes cylindriques tranversaux (27) parallèles à la direction axiale de déplacement de l'armature (25) et du plateau (26) et traversant librement le corps (22a) de l'inducteur de frein (22).

8. Dispositif selon la revendication 7, caractérisé en ce que des axes cylindriques parallèles (32) sont montés coulissants dans le corps (22a) de l'inducteur de frein (22) entre l'armature de frein (25) et le plateau de frein (26) à l'extérieur des axes de liaison (27) de l'armature (25) au plateau (26) de façon à permettre à l'armature de frein (25) d'excercer l'effort de poussée sur le plateau de frein (26) lorsque la bobine (23) de l'inducteur de frein (22) est alimentée.

9. Dispositif selon l'une des revendications 1, 3 à 8, caractérisé en ce que l'armature d'embrayage (15) est solidaire en rotation de l'élément mené (2) par l'intermédiaire d'une membrane annulaire flexible (17) permettant le déplacement axial de l'armature d'embrayage (15) indépendamment du degré d'usure des garnitures de friction (35, 36) du disque de frein (33).

10. Dispositif selon l'une des revendications 1, 3 à 9, caractérisé en ce que le corps (22a) de l'inducteur de frein (22) comprend des oreilles radialement saillantes (22a2) fixées entre le carter de frein (3) et le carter d'embrayage (7) par des vis de fixation parallèles (39) transversales aux oreilles (22a2) enserrant ces dernières par des parties formant brides de fixation (3a, 7a) respectivement du carter de frein (3) et du carter d'embrayage (7) et des clinquants (40) sont disposés de part et d'autre de chaque oreille (22a2) et entre les deux brides de fixation (3a, 7a) pour régler la course du disque de frein (33) et celle de l'armature d'embrayage (15).

11. Dispositif selon l'une des revendications précédentes, caractérisé en ce que l'élément mené (2) est un arbre rotatif et le moyeu de frein (16) est fixé sur l'arbre mené (2) par une frette de serrage (20) à l'aide de vis de fixation (21) et l'élément menant (6) est un arbre rotatif auquel est accouplée une poulie d'entrée (5).

12. Dispositif selon l'une des revendications 9 à 11, caractérisé en ce que l'inducteur d'embrayage (10) est centré et fixé dans le carter d'embrayage (7).

13. Dispositif selon l'une des revendications précédentes, caractérisé en ce qu'il est utilisé pour la commande principale d'un métier à tisser.
